# EUROPÄISCHE PATENTANMELDUNG

(11) **EP 1 900 993 A2**
(43) Veröffentlichungstag der Anmeldung: **19.03.2008**
(21) Anmeldenummer: 07012465.6
(22) Anmeldetag: 26.06.2007
(51) Int. Cl.: F16N 27/02, F16N 13/16, F16N 13/14

(54) **Schmiermittel-Dosierpumpe und Dosierverfahren mit zwei gegeneinander beweglichen Kolben**

(30) Priorität: 15.08.2006 DE 102006038389
(71) Anmelder: Willy Vogel Aktiengesellschaft, 12277 Berlin (DE)
(72) Erfinder: Schönherr, Dieter, 14979 Kleinbeeren (DE); Bauer, Friedrich, 10825 Berlin (DE)
(74) Vertreter: Grünecker, Kinkeldey, Stockmair & Schwanhäusser Anwaltssozietät

(57) **Zusammenfassung**

Die Erfindung betrifft ein Verfahren zum Dosieren eines Schmiermittels sowie eine Schmiermittel-Dosierpumpe (1). Um die bei einer Minimalmengen-Schmierung erforderlichen kleinen Schmiermengen exakt dosieren zu können, ist erfindungsgemäß vorgesehen, dass wenigstens zwei Kolben (2a, 2b) aus einer Ausgangsstellung unter Vergrößerung eines sich zwischen ihnen befindlichen Dosiervolumens (16) relativ zueinander bewegt werden und dadurch Schmiermittel durch eine Einlassöffnung (12) in das Dosiervolumen gefördert wird. Anschließend wird die Einlassöffnung verschlossen und die beiden sich in Hubrichtung (H) gegenüberliegenden Kolben werden mitsamt dem Dosiervolumen bewegt, bis in einer Abgabestellung das Dosiervolumen in Hubrichtung von der Einlassöffnung beabstandeten Abgabeöffnung (13) verbunden wird. Dann werden die Kolben unter Verkleinerung des Dosiervolumens relativ zueinander bewegt und fördern eine vorbestimmte Dosiermenge des Schmiermittels durch die Abgabeöffnung. Schließlich werden die Kolben zurück in die Ausgangsstellung bewegt. Insbesondere kann wird das Dosiervolumen auf Null verkleinert werden, indem beide Kolben relativ zueinander bewegt werden, bis sie einander berühren.

## Beschreibung

Die Erfindung betrifft ein Verfahren zum Dosieren eines Schmiermittels sowie eine Schmiermittel-Dosierpumpe.

Im Bereich der Dosierpumpen ist es problematisch, kleine Mengen im Bereich von 0,5 mm³ bis etwa 15 mm³, vorzugsweise 1 mm³ bis 10 mm³, exakt zu dosieren. Gerade die Dosierung kleiner Mengen ist jedoch aufgrund der immer mehr Verbreitung findenden Minimalmengen-Schmierverfahren, wie beispielsweise der Öl+Luftschmierung, zunehmend wichtiger.

Der Erfindung liegt daher die Aufgabe zugrunde, kleine Mengen von Schmiermittel exakt zu dosieren.

Diese Aufgabe wird erfindungsgemäß für das eingangs genannte Verfahren gelöst, indem wenigstens ein Kolben aus einer Ausgangsstellung relativ zu wenigstens einem anderen Kolben unter Vergrößerung eines sich zwischen den Kolben befindlichen Dosiervolumens bewegt wird und dadurch das Schmiermittel durch eine Einlassöffnung in das Dosiervolumen gefördert wird, anschließend die Einlassöffnung verschlossen wird und die Kolben mit dem Dosiervolumen in Richtung einer Abgabeöffnung bewegt werden, bis in einer Abgabestellung das Dosiervolumen mit der Abgabeöffnung verbunden wird, dann wenigstens ein Kolben unter Verkleinerung des Dosiervolumens relativ zu wenigstens einem anderen Kolben bewegt und eine vorbestimmte Dosiermenge des Schmiermittels durch die Abgabeöffnung gefördert wird und schließlich die Kolben zurück in die Ausgangsstellung bewegt werden.

Für die eingangs genannte Schmiermittel-Dosierpumpe wird diese Aufgabe erfindungsgemäß durch eine Ausgestaltung gelöst, bei der wenigstens zwei in einem Zylinder relativ zueinander beweglich angeordnete Kolben, die sich in Hubrichtung gegenüberliegen, eine im Bereich eines Kolbenhubs wenigstens eines der Kolben angeordnete, in den Zylinder mündende Einlassöffnung und eine in Hubrichtung von der Einlassöffnung beabstandete, in den Zylinder mündende Abgabeöffnung, die im Bereich des Kolbenhubs wenigstens eines der Kolben angeordnet ist, vorgesehen sind, wobei sich zwischen den Kolben ein volumenveränderliches und von der Einlassöffnung zu der Abgabeöffnung bewegliches Dosiervolumen befindet.

Die erfindungsgemäße Lösung ist einfach und ermöglicht eine überraschend genaue Dosierung des Schmiermittels.

Durch verschiedene, jeweils für sich vorteilhafte Ausgestaltungen kann die Erfindung weiter entwickelt sein.

So kann in einer vorteilhaften Weiterbildung beispielsweise eine besonders genaue Dosierung ermöglicht werden, wenn das Dosiervolumen bei der Abgabe des Schmiermittels auf Null verringert wird. Dies wird beispielsweise dadurch erreicht, dass beide Kolben in der Abgabestellung relativ zueinander bewegt werden, bis sie aneinander anschlagen. Entsprechend können sich bei der Schmiermittel-Dosierpumpe wenigstens in der Abgabestellung die Kolbenhübe überlappen. Diese Ausgestaltung ermöglicht den vollständigen Auswurf des Schmiermittels aus dem Dosiervolumen.

Wenigstens ein Kolben kann in wenigstens einer Richtung hydraulisch oder pneumatisch angetrieben sein. Insbesondere der hydraulische Antrieb durch das Schmiermittel selbst stellt eine einfache und kostengünstig zu realisierende Ausgestaltung dar, die ohne zusätzliche Druckleitungen auskommt und zu einer autarken, selbstständig arbeitenden Schmiermittel-Dosierpumpe führt, die keine weitere Energiezufuhr von außen benötigt. Der hydraulische Antrieb wenigstens eines Kolbens kann gegen eine Federkraft erfolgen, die durch wenigstens ein Federelement erzeugt ist und für eine automatische Rückstellung sorgt. Dabei kann die Federkraft in einer Ausgestaltung über das Dosiervolumen zu dem hydraulisch angetriebenen Kolben geleitet sein, also der eine Kolben gegen die auf den anderen Spaltkolben wirkende Federkraft bewegt werden.

Vorzugsweise stellen die Kolbenumfangsflächen Spaltdichtungen dar, welche die Kolben die insbesondere ohne Gummidichtungen gegen die Kolbenaufnahme abdichten können, so dass keine Luftvolumina im Bereich des Dosiervolumens entstehen können, welche die Dosiergenauigkeit beeinträchtigen würden.

Ferner können sich die Kolbenhübe im Bereich zwischen der Einlassöffnung und der Abgabeöffnung überlappen. Bei der Bewegung des Dosiervolumens in Hubrichtung von der Ausgangsstellung in die Abgabestellung kann die Einlassöffnung vorzugsweise von dem einen an der Einlassöffnung liegenden Kolben verschlossen werden. Bei der Rückbewegung wird die Abgabeöffnung vorzugsweise von dem anderen an der Abgabeöffnung liegendem Kolben verschlossen. Durch eine längere Hubbewegung sind, insbesondere bei einer Ausgestaltung der zwei Kolbenumfangsflächen als Spaltdichtungen, die jeweiligen Dichtflächen zwischen dem Dosiervolumen und den jeweiligen Öffnungen groß genug, um Leckagen und damit Veränderungen des Dosiervolumens zuverlässig zu vermeiden. Bevorzugt ist ferner die Stirnfläche des die Abgabeöffnung verschließenden Kolbens in der Ausgangsstellung weiter von der Abgabeöffnung entfernt als von der Einlassöffnung.

Die Förderung des Schmiermittels in das Dosiervolumen durch die Einlassöffnung und/oder die Förderung des Schmiermittels aus dem Dosiervolumen durch die Abgabeöffnung kann unter Einwirkung eines Hydraulik- oder Pneumatikdrucks oder unter Einwirkung eines Federelements auf wenigstens einen der Kolben erfolgen.

In einer weiteren vorteilhaften Ausgestaltung, kann der Antrieb wenigstens eines Kolbens, beispielsweise bei der Bewegung aus der und/oder in die Abgabestellung und/oder die Ausgangsstellung, durch den anderen Kolben erfolgen, beispielsweise indem der eine Kolben unter Federkraft oder mittels eines auf den einen Kolben wirkenden Hydraulik - oder Pneumatikdrucks gegen den anderen Kolben gedrückt wird. Die auf den einen Kolben wirkende Antriebskraft kann über das im Dosiervolumen enthaltene Schmiermittel an den anderen Kolben weitergeleitet werden, so dass dieser passiv mitgenommen wird. In diesem Fall wird das Schmiermittel automatisch aus dem Dosiervolumen durch die Abgabeöffnung gefördert, wenn das Dosiervolumen in Verbindung mit der Abgabeöffnung kommt und die Antriebskraft den einen Kolben unter Verdrängung des Schmiermittels aus dem Dosiervolumen durch die Abgabeöffnung auf den anderen Kolben zu bewegt. Vorzugsweise ist der andere Kolben mit einem Element, wie beispielsweise einem Federelement, versehen, welches eine der Antriebskraft entgegengerichtete Gegenkraft erzeugt.

Die Betriebssicherheit kann erhöht werden, wenn in der Ausgangsstellung und/oder in der Abgabestellung jeweils wenigstens ein Kolben in einer Endstellung festgehalten ist, also der jeweilige Kolbenhub im Bereich der Einlassöffnung und/oder der Abgabeöffnung endet. Eine solche Endstellung kann beispielsweise erreicht werden, wenn ein Kolben unter einer auf ihn wirkende Kraft gegen einen Anschlag gefahren ist.

Im Folgenden werden zwei Ausführungsformen der Erfindung beispielhaft mit Bezug auf die Zeichnungen erläutert. Die bei den Ausführungsformen unterschiedlichen Merkmale können gemäß den obigen Ausführungen zu den unterschiedlichen Weiterbildungen beliebig miteinander kombiniert werden.

Es zeigen:
- Fig. 1: eine erste Ausführungsform der erfindungsgemäßen Schmiermittel-Dosierpumpe in einer schematischen Schnittdarstellung;
- Fig. 2 bis 6: weitere schematische Schnittdarstellungen der Ausführungsform der Fig. 1 in weiteren Betriebsstellungen;
- Fig. 7: eine zweite Ausführungsform der erfindungsgemäßen Schmiermittel-Dosierpumpe in einer schematischen Schnittdarstellung;
- Fig. 8 bis 12: weitere schematische Schnittdarstellungen der Ausführungsform der Fig. 2 in weiteren Betriebsstellungen.

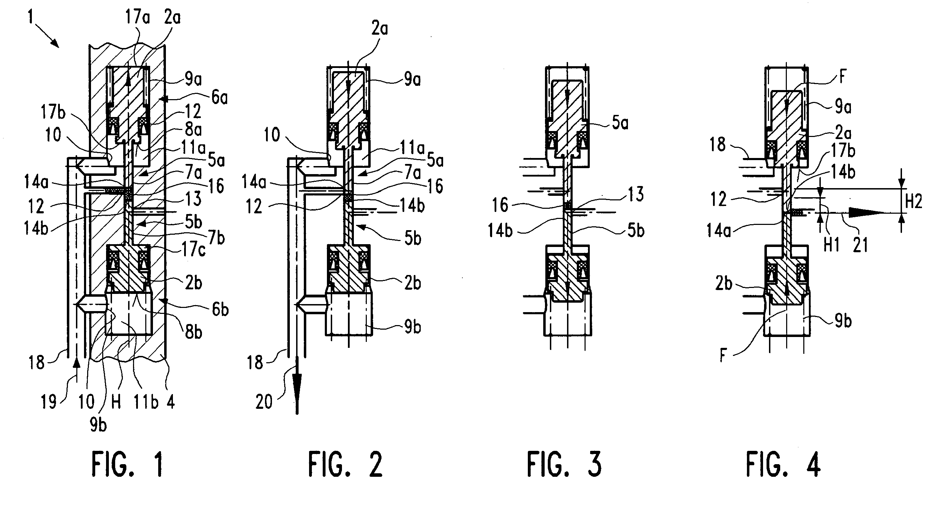

Zunächst wird der Aufbau einer erfindungsgemäßen Schmiermittel-Dosierpumpe beispielhaft anhand der schematischen Schnittdarstellung der Fig. 1 erläutert.

Demnach weist die Schmiermittel-Dosierpumpe 1 wenigstens zwei Kolben 2a, 2b auf, die in einer Kolbenaufnahme 4 beweglich angeordnet sind. Die Hubrichtungen H der beiden Kolben 2a, 2b verlaufen parallel oder fallen vorzugsweise zusammen. Die Kolben 2a, 2b liegen sich in Hubrichtung H gegenüber.

Die Kolben 2a, 2b weisen jeweils einen Dosierabschnitt 5a, 5b und einen Steuerabschnitt 6a, 6b auf, wobei der Steuerabschnitt 6a, 6b mit einer größeren, im Wesentlichen quer zur Hubrichtung H verlaufenden Querschnittsfläche versehen sein kann als der jeweilige Dosierabschnitt 5a, 5b.

Entsprechend kann die Kolbenaufnahme 4 im Bereich der Dosierabschnitte 5a, 5b mit einem kleineren lichten Querschnitt und im Bereich der Steuerabschnitte 6a, 6b mit einem größeren lichten Querschnitt versehen sein, der jeweils an die Außenkonturen dieser Abschnitte angepasst ist. Die Toleranzen zwischen der Kolbenaufnahme 4 und den Dosierabschnitten 5a, 5b sind dabei vorzugsweise so gewählt, dass eine Spaltdichtung 7a, 7b an den Umfangsflächen jeweils zwischen den Dosierabschnitten 5a, 5b der Kolben 2a, 2b und der Kolbenaufnahme 4 entsteht.

Wenigstens eine in Hubrichtung H gelegene stirnseitige Antriebsfläche 8a, 8b der Kolben 2a, 2b dient als Antriebsfläche, auf die zum Antrieb des jeweiligen Kolbens ein hydraulischer oder pneumatischer Druck einwirken kann. Die Antriebsflächen 8a, 8b sind vorzugsweise am Steuerabschnitt 6a, 6b angeordnet.

Ferner können die Kolben 2a, 2b mit Federelementen 9a, 9b versehen sein, welche die Kolben 2a, 2b jeweils mit einer Federkraft F beaufschlagen. Insbesondere können die bei den beiden Kolben jeweils erzeugten Federkräfte gegeneinander gerichtet sein, so dass die beiden Kolben 2a, 2b im Ruhezustand, wenn kein Druck auf die Antriebsflächen 8a, 8b, wirkt, in Richtung aufeinander zu gedrückt sind. Wenigstens ein Federelement, in Fig. 1 das Federelement 9a, wirkt gegen den auf die Antriebsflächen 8a, 8b wirkenden Druck.

Die Schmiermittel-Dosierpumpe 1 in der in Fig. 1 dargestellten Ausführungsform weist pro Kolben 2a, 2b wenigstens eine Steueröffnung 10 auf, die in einer an eine der Antriebsflächen 8a, 8b angrenzenden Antriebskammer 11a, 11 b mündet. Die Antriebskammern 11a, 11 b bzw. Antriebsflächen 8a, 8b liegen auf der bezüglich der Hubrichtung H jeweils gegen den Federelementen 9a, 9b gegenüberliegenden Stirnseite der Kolben 2a, 2b.

Eine Einlassöffnung 12 und eine Abgabeöffnung 13 sind in Hubrichtung H voneinander beabstandet und münden in die Kolbenaufnahme 4. So ist beispielsweise die Einlassöffnung 12 in einem Abschnitt der Kolbenaufnahme 4 angeordnet, der im Zuge eines Hubs H1 (vgl.

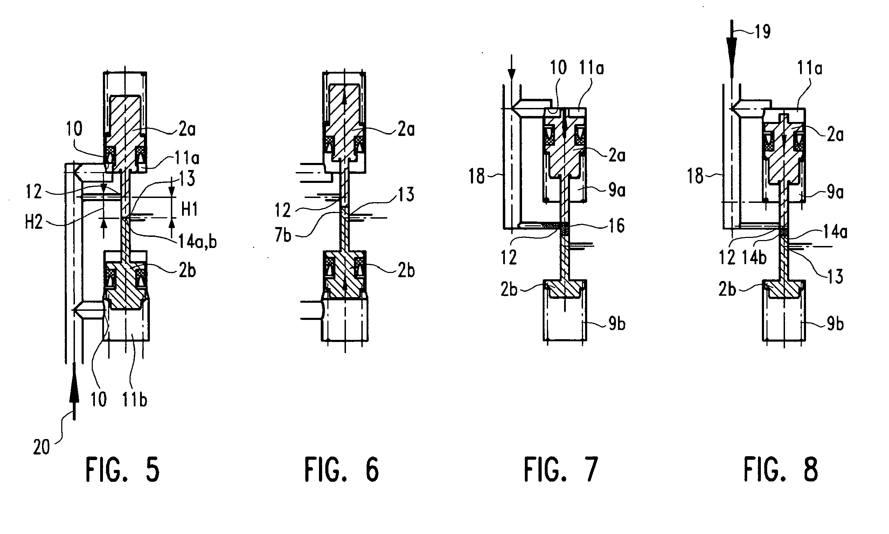

Fig. 5) von der stirnseitigen Endfläche 14a des Dosierabschnitts 5a des an der Einlassöffnung 12 liegenden Kolbens 2a überstrichen wird. Die Abgabeöffnung 13 ist entsprechend in einem Bereich der Kolbenaufnahme 4 angeordnet, der im Zuge eines Hubs H2 (vgl. Fig. 5) des anderen, an der Abgabeöffnung liegenden Kolbens 2b von der stirnseitigen Endfläche 14b des Dosierabschnitts 5 dieses Kolbens 2b überstrichen wird. Der Hub H2 des Kolbens 2b kann im Bereich der Abgabeöffnung 13 enden oder in Richtung weg vom anderen Kolben 2a über die Abgabeöffnung 13 hinausgehen. Ebenso kann der Hub des Kolbens 2a im Bereich der Einlassöffnung 12 enden oder in Richtung weg von anderen Kolben über die Einlassöffnung 12 hinausgehen.

Zwischen den beiden Kolben 2a, 2b ist ein in Hubrichtung H bewegliches, größenveränderliches Dosiervolumen 16 angeordnet, das in der Ausgangsstellung der Fig. 1 mit der Einlassöffnung 12 verbunden ist.

Vorzugsweise am Steuerabschnitt 6 eines jeden Kolbens sind in Hubrichtung H oder entgegen Hubrichtung H weisende, mit den Kolben bewegungsstarr verbundene Anschläge 17a, 17b, 17c vorgesehen, welche mit der Kolbenaufnahme zugeordneten, stationären Gegenanschlägen zusammenwirken und jeweils den Hub H1, H2 der Kolben 2a, 2b in wenigstens eine Richtung begrenzen. Insbesondere kann bei einem der Kolben, insbesondere bei den an die Einlassöffnung 12 grenzenden Kolben 2a, der Hub H1 in beiden Richtungen durch Anschläge begrenzt sein. Dies gilt auch für den Kolben 2b.

Bevorzugt sind sowohl die Einlassöffnung 12 als auch die Steueröffnungen 10 miteinander und mit einer vorzugsweise intermittierend druckbeaufschlagten Schmiermittelleitung 18 verbunden. Dadurch erhält man eine autarke, selbsttätig arbeitende Schmiermittelpumpe 1.

Die Abgabeöffnung 13 kann mit einer nicht gezeigten Schmiermittelleitung verbunden sein, die zu einer oder mehreren ebenfalls nicht dargestellten Schmierstellen führt. Die Einlassöffnung 12, bzw. die Schmiermittelleitung 18 kann mit einem ebenfalls nicht dargestellten Schmiermittelvorrat oder einer nicht gezeigten Schmiermitteförderpumpe verbunden sein.

Anhand der schematischen Schnittdarstellungen der Figuren 1 bis 6 wird nunmehr die Funktion der Ausführungsform der Fig. 1 erläutert. Die Fig. 1 bis 6 zeigen dieselbe Ausführungsform zu verschiedenen Zeitpunkten eines Betriebszyklus, bei dem die im Dosiervolumen enthaltene Schmiermittelmenge abgegeben wird.

In der in Fig. 1 gezeigten Ausgangsstellung ist das Schmiermittel in der Schmiermittelleitung 18, wie durch den Pfeil 19 angedeutet, mit Druck beaufschlagt. Der Druck wirkt über die Steueröffnungen 10 auf die Antriebsflächen 8a, 8b der Kolben 2a, 2b so dass diese jeweils in ihre an der Einlassöffnung liegenden Endstellungen gegen die Wirkung wenigstens des einen Federelements 9a verfahren sind und die entsprechenden Anschläge 17a, 17c an den kolbenaufnahmeseitigen Gegenanschlägen anliegen. In der Ausgangsstellung sind die Stirnflächen 14a, 14b der Dosierabschnitte 5a, 5b in Hubrichtung H voneinander beabstandet und durch die Einlassöffnung 12 ist das Dosiervolumen 16 mit Schmiermittel befüllt. Da insbesondere der in Fig. 1 untere, die Abgabeöffnung verschließende Kolben 2b als Differenzialkolben ausgebildet ist, dessen eine Stirnfläche von dem Dosierabschnitt 5 und dessen andere Stirnfläche von der Antriebsfläche 8b gebildet ist, reicht der auf die Stirnfläche 14b wirkende Druck im Dosiervolumen 16 nicht aus, um die auf die Antriebsfläche 8b wirkende Druckkraft zu überwinden.

Durch eine Verstellung des Anschlags 17c des die Abgabeöffnung 13 verschließenden Kolbens 2b in Richtung auf den Kolben 2a zu oder von diesem weg vorzugsweise von außerhalb der Schmiermitteldosierpumpe 1, lässt sich das Dosiervolumen auf einfache Weise verkleinern oder vergrößern.

Im nächsten Schritt, wie er in Fig. 2 dargestellt ist, ist die Schmiermittelleitung 18 nicht mehr mit einem Druck beaufschlagt. Dies geschieht beispielsweise, weil eine in den Fig. 1 bis 6 nicht gezeigte, mit der Schmiermittelleitung 18 verbundene Schmiermittelförderpumpe abgeschaltet ist. Die Schmiermittelleitung 18 ist in Fig. 2 beispielsweise mit einem Schmiermittelreservoir verbunden.

Das auf den Kolben 2a einwirkende Federelement 9a bewegt diesen nunmehr aus der Endstellung unter Verkleinerung des Dosiervolumens 16 in Richtung des anderen Kolbens 2b. Im Zuge dieser Bewegung wird Schmiermittel aus der Antriebskammer 11a durch die Steueröffnung 10 und aus dem Dosiervolumen 16 durch die Einlassöffnung 12 zurück in die Schmiermittelleitung 18 gefördert, wie dies in Fig. 2 durch den Pfeil 20 schematisch dargestellt ist. Im Zuge dieser Bewegung überstreicht die Stirnfläche 14a des Dosierabschnitts 5a des Kolbens 2a die Einlassöffnung 12, so dass der nachfolgende Dosierabschnitt 5a die Einlassöffnung 14 über die Spaltdichtung 7a abdichtet und den Rückfluss von Schmiermittel 16 durch die Einlassöffnung 12 unterbindet. Diese Position ist in Fig. 2 gezeigt. Der Abstand zwischen den beiden Stirnflächen 14a, 14b und deren Querschnitt in dem Moment, in dem die Einlassöffnung 12 verschlossen ist, bestimmt die Größe des Dosiervolumens 16.

Da das Federelement 9a stärker ausgebildet ist, als das entgegen wirkende Federelement 9b und weil das Schmiermittel im Dosiervolumen 16 inkompressibel ist, bewegt der Kolben 2a nach dem Verschließen der Einlassöffnung 12 den Kolben 2b gegen die Wirkung des dem Kolben 2b zugeordneten Federelements 9b. Entsprechend bewegt sich das Dosiervolumen 16 mit der Bewegung der beiden Kolben 2a, 2b in Hubrichtung H zur Abgabeöffnung 13 hin. Da der Kolben 2a den passiven Kolben 2b bei dieser Hubbewegung mitnimmt, kann der Kolben 2a bei der Ausführungsform der Fig. 1 auch als Antriebskolben bezeichnet werden.

In Fig. 3 ist der Zeitpunkt schematisch dargestellt, zu dem die Stirnfläche 14b des an der Abgabeöffnung 13 liegenden Kolbens 2b gerade beginnt, die Abgabeöffnung 13 zu überstreichen. Bis zu diesem Zeitpunkt war die Abgabeöffnung 13 vom Dosierabschnitt 5b des Kolbens 2b verschlossen. Passiert die Stirnfläche 14b die Abgabeöffnung 13, so ist diese geöffnet und mit dem Dosiervolumen 16 verbunden. Das Schmiermittel im Dosiervolumen kann nunmehr Druck des Federelements 9a und/oder dem Druck des Federelements 9b nachgeben, indem es durch die Abgabeöffnung 13 aus der Schmiermittel-Dosierpumpe 1 strömt, wie dies in Fig. 4 durch den Pfeil 21 angedeutet ist.

Wie in Fig. 4 ferner gezeigt ist, liegt am Ende seines Hubes H1 der die Einlassöffnung 12 verschließende Kolben 2a im Bereich der Abgabeöffnung 13, so dass diese geöffnet bleibt. Durch diese Endlage ist sichergestellt, dass das gesamte im Dosiervolumen 16 enthaltene Schmiermittel abgegeben werden kann. Da der Kolben 2b mit seiner Hubbewegung gegen den Kolben 2a das Schmiermittel aus dem Dosiervolumen fördert, kann der Kolben bei der Ausführungsform der Fig. 1 als Dosierkolben bezeichnet werden.

In der in Fig. 4 gezeigten Stellung liegen die Stirnflächen 14a, 14b aneinander an und das Dosiervolumen ist auf Null verringert. Diese Lage der Kolben 2a, 2b ist bei druckfreier Schmiermittelleitung 18 stabil, da der Kolben 2a von der stärkeren Druckfeder 9a gegen seinen in Richtung des anderen Kolbens 2b weisenden Anschlag 17b gedrückt ist und der andere Kolben 2b mit dem schwächeren Federelement 9b gegen den Kolben 2b drückt, so dass der Kolben 2a den Anschlag für den Kolben 2b bildet.

Wird in einem nächsten Schmierzyklus nunmehr der Schmiermitteldruck in der Schmiermittelleitung 18 wieder aufgebaut, wie dies in Fig. 5 durch den Pfeil 19 dargestellt ist, so wirkt der Schmiermitteldruck über die Steueröffnungen 10 auf die Antriebskammern 11a und 11 b und die Kolben 2a, 2b werden aus der Abgabestellung in die Ausgangsstellung zurückbewegt, wobei die Stirnflächen 14a, 14b zumindest am Anfang dieser Bewegung aneinander liegen können. Der Kolben 2b verschließt dabei wieder die Abgabeöffnung 13, wie in Fig. 6 gezeigt ist.

Erreicht der Kolben 2b seine zum Kolben 2a hin weisende Endstellung, so bewegt sich der Kolben 2a unter Vergrößerung des zwischen den Kolben 2a, 2b angeordneten Dosiervolumens 16 weiter. Sobald die Stirnfläche 14a des Dosierabschnitts 5a die Einlassöffnung 12 passiert, wird diese geöffnet und Schmiermittel in das Dosiervolumen 16 gefördert, wie in Fig. 1 dargestellt ist. Der Betriebszyklus der Schmiermittel-Dosiereinrichtung 1 beginnt folglich von Neuem.

Durch die Spaltdichtung 7b wird vermieden, dass durch Druckdifferenzen zwischen dem Dosiervolumen 16 und der Abgabeöffnung 13 Schmiermittel durch die Abgabeöffnung 13 strömen und die abgegebene Dosiermenge ändern kann. Hierzu ist in der Ausgangsstellung die Stirnfläche 14b des einen, an der Abgabeöffnung 13 liegenden Kolbens 2b weiter von der Abgabeöffnung 13 beabstandet als von der Einlassöffnung 12.

Im Folgenden wird der Aufbau der zweiten Ausführungsform mit Bezug auf die Fig. 7 erläutert, wobei der Kürze halber lediglich auf die Unterschiede zur Ausführungsform der Fig. 1 eingegangen wird. Bei der zweiten Ausführungsform werden dieselben Bezugszeichen verwendet wie bei der ersten Ausführungsform, soweit die entsprechend bezeichneten Elemente einander hinsichtlich Aufbau und/oder Funktion entsprechen.

Die Ausführungsform der Fig. 7 ist konstruktiv einfacher ausgestaltet als die erste Ausführungsform. Lediglich einer der Kolben, bei dieser Ausführungsform der an der Einlassöffnung gelegene Kolben 2a, ist hydraulisch angetrieben. Folglich ist lediglich eine Steueröffnung 10 vorgesehen. Im Unterschied zur Ausführungsform der Fig. 1 mündet die Steueröffnung 10 zudem nicht an der dem anderen Kolben 2b zugewandten Seite des Kolbens 2 sondern an dessen abgewandter Seite, so dass durch einen Druck in der Antriebskammer 11a der Kolben 2a auf den Kolben 2b zu bewegt wird. Das Federelement 9a ist, gegen den Druck in der Antriebskammer 11a wirkend, an der bezüglich der Antriebskammer 11a anderen Seite des Kolbens 2a angeordnet.

Auf den Kolben 2b wirkt lediglich das Federelement 9b, welches eine in Richtung des anderen Kolbens 2b weisende Druckkraft ausübt. Die Druckkraft ist geringer als die vom Schmiermitteldruck erzeugte Antriebskraft des Kolbens 2a.

Im Folgenden wird die Funktion der zweiten Ausführungsform anhand der Figuren 7 bis 12 geschildert wobei die Stellungen der Figuren 7 bis 12 bezüglich der Lage des Dosiervolumens 16 den Stellungen in den Figuren 1 bis 6 entsprechen. Durch die unterschiedliche Anordnung von Antriebskammern und Federelementen ist jedoch die Bewegung des Dosiervolumens 1 b bezüglich des Druckauf- und -abbaus in der Steueröffnung 10 phasenverschoben.

Die Schmiermittelleitung 18 ist in der Ausgangsstellung der Fig. 7, in der sich der Kolben 2b in seiner zum anderen Kolben 2a hin bewegten Endstellung und der Kolben 2a sich in seiner vom Kolben 2b weg bewegten Endstellung befindet, druckfrei. Die Kolben 2a, 2b sind durch die jeweils auf sie einwirkenden Federelemente 9a, 9b unter Ausbildung des Dosiervolumens 16 gegen entsprechende Anschläge gedrückt und das Dosiervolumen 16 ist mit Schmiermittel befüllt. Wird nun die Schmiermittelleitung 18 über eine nicht dargestellte Schmierpumpe zu Beginn eines Schmierzyklus mit Druck beaufschlagt, so wirkt dieser auf die Antriebskammer 11a des Kolbens 2a (Fig. 8). Wie beim ersten Ausführungsbeispiel bewegt der Kolben 2a sich gegen die Wirkung des Federelements 9a mit seiner Stirnfläche 14a über die Einlassöffnung 12 und verschließt diese. Sobald die Einlassöffnung verschlossen ist, wird der Kolben 2b gegen die Wirkung des Federelements 9b durch den Kolben 2b verschoben, so dass sich das Dosiervolumen 16 mit den Kolben 2a, 2b zur Abgabeöffnung 13 hin bewegt.

Sobald die Stirnfläche 14b des Kolbens 2b die Abgabeöffnung 13 überstreicht, kann Schmiermittel aus dem Dosiervolumen 16 durch die Abgabeöffnung 13 abströmen. In seiner Endstellung liegt der Kolben 2a mit seiner Stirnfläche 14a im Bereich der Abgabeöffnung 13, ohne diese zu verschließen, so dass das restliche Schmiermittel aus dem Dosiervolumen 16 durch die Wirkung des Federelements 9b mittels des an der Abgabeöffnung 13 angeordneten Kolbens 2b durch die Abgabeöffnung 13 gepresst wird (Pfeil 21), bis die Stirnflächen 14a, 14b aneinander anliegen.

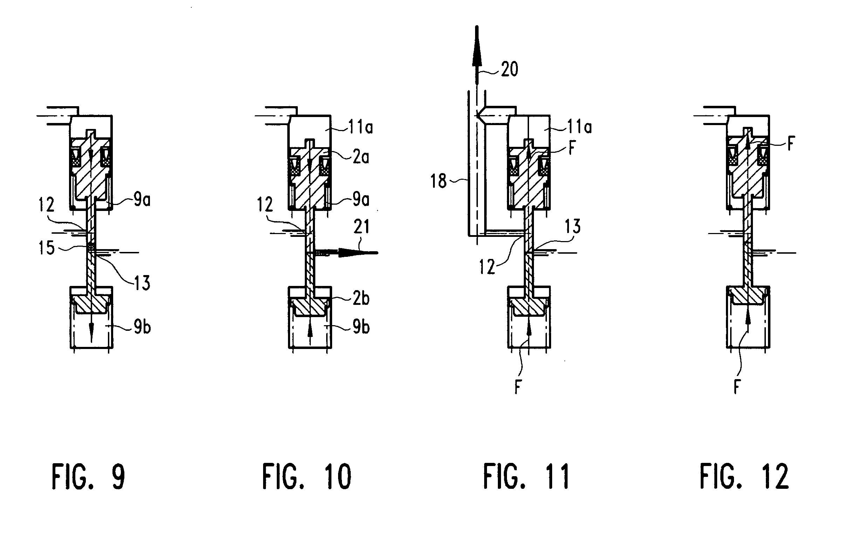

Am Ende des Schmierzyklus ist die Schmiermittelleitung 18 nicht mehr druckbeaufschlagt und die Kolben 2a, 2b bewegen sich unter Wirkung der Federelemente 9a, 9b in Richtung der der Ausgangsstellung zugeordneten, an der Einlassöffnung 12 gelegenen Endstellungen, während das Schmiermittel aus der Antriebskammer 11a durch die Schmiermittelleitung 18 zurück strömt (Fig. 11 und 12).

Erreicht der auf der Seite der Abgabeöffnung 13 gelegene Kolben 2b seine Endstellung an der Abgabeöffnung 13, so wird der Kolben 2a vom Federelement 9a unter Vergrößerung des Dosiervolumens 16 weiter bis in seine vom anderen Kolben 2b entfernte Endstellung bewegt. Dabei wird, wie bei der ersten Ausführungsform, Schmiermittel durch die Einlassöffnung 12 in das Dosiervolumen 16 gefördert.

Zu der oben beschriebenen Ausgestaltung und der oben beschriebenen Funktionsweise sind weitere Modifikationen möglich. So können beispielsweise in den unterschiedlichen Ausführungsformen die Federelemente 9a, 9b jeweils mit den Antriebskammern 11 a, 11 b vertauscht sein, ohne dass dies grundsätzlich an der Funktionsweise etwas ändern würde, lediglich der Phasenbezug zum Druck in der Schmiermittelleitung ändert sich.

Ferner kann in der Abgabestellung der an der Abgabeöffnung 13 liegende Kolben 2b gegen einen Anschlag gefahren sein, so dass der an der Einlassöffnung 12 gelegene Kolben 2a gegen den stationären Kolben 2b bewegt wird und so das Schmiermittel aus dem Dosiervolumen fördert.

## Patentansprüche

1. Verfahren zum exakten Dosieren eines Schmiermittels, bei dem wenigstens ein Kolben (2a) aus einer Ausgangsstellung relativ zu wenigstens einem anderen Kolben (2b) unter Vergrößerung eines sich zwischen den Kolben befindlichen Dosiervolumens (16) bewegt wird und dadurch das Schmiermittel durch eine Einlassöffnung (12) in das Dosiervolumen gefördert wird, anschließend die Einlassöffnung verschlossen wird und die Kolben mit dem Dosiervolumen in Richtung einer Abgabeöffnung 13 bewegt werden, bis in einer Abgabestellung das Dosiervolumen mit der Abgabeöffnung verbunden wird, dann wenigstens ein Kolben (2b) unter Verkleinerung des Dosiervolumens relativ zu wenigstens einem anderen Kolben (2a) bewegt und eine vorbestimmte Dosiermenge des Schmiermittels durch die Abgabeöffnung gefördert wird, und schließlich die Kolben (2a, 2b) zurück in die Ausgangsstellung bewegt werden.

2. Verfahren nach Anspruch 1, wobei das Dosiervolumen (16) verkleinert wird, indem beide Kolben (2a, 2b) relativ zueinander bewegt werden, bis sie einander berühren.

3. Verfahren nach Anspruch 1 oder 2, wobei bei der Bewegung in die Ausgangsstellung und/oder Abgabestellung ein Kolben (2a, 2b) vom anderen Kolben (3, 2) bewegt wird.

4. Verfahren nach einem der oben genannten Ansprüche, wobei die Einlassöffnung (12) von einem Kolben (2a) bei der Bewegung in die Abgabestellung verschlossen wird.

5. Verfahren nach einem der oben genannten Ansprüche, wobei die Abgabeöffnung (13) von einem Kolben (2b) bei der Bewegung in die Ausgangsstellung verschlossen wird.

6. Verfahren nach einem der oben genannten Ansprüche, wobei wenigstens ein Kolben (2a) hydraulisch oder pneumatisch angetrieben wird.

7. Verfahren nach Anspruch 6, wobei der hydraulische Antrieb durch das Schmiermittel erfolgt.

8. Verfahren nach Anspruch 6 oder 7, wobei der hydraulische Antrieb nur in einer Bewegungsrichtung der Kolben (2a, 2b) erfolgt.

9. Verfahren nach einem der oben genannten Ansprüche, wobei die Kolben (2a, 2b) in einer Bewegungsrichtung durch wenigstens ein Federelement (9a, 9b) angetrieben sind.

10. Schmiermittel-Dosierpumpe (1) mit wenigstens zwei in einer Kolbenaufnahme relativ zueinander beweglich angeordneten Kolben (2a, 2b), die sich in Hubrichtung (H) gegenüber liegen, mit einer im Bereich eines Kolbenhubs (H1) wenigstens eines der Kolben (2a) angeordneten, in die Kolbenaufnahme (4) mündenden Einlassöffnung (12), mit einer in Hubrichtung (H) von der Einlassöffnung (12) beabstandeten, in die Kolbenaufnahme (4) mündenden Abgabeöffnung (13), die im Bereich des Kolbenhubs (H2) wenigstens eines der Kolben (2a) angeordnet ist, wobei sich zwischen den Kolben ein volumenveränderliches und von der Einlassöffnung zu der Abgabeöffnung bewegliches Dosiervolumen (16) befindet.

11. Schmiermittel-Dosierpumpe (1) nach Anspruch 10, wobei sich die Kolbenhübe (H1, H2) im Bereich zwischen der Einlassöffnung (12) und der Abgabeöffnung (13) überlappen.

12. Schmiermittel-Dosierpumpe (1) nach Anspruch 10 oder 11, wobei der Kolbenhub (H1) eines Kolbens (2a) sich über die Einlassöffnung (12) erstreckt und im von der Abgabeöffnung (13) überdeckten Bereich der Kolbenaufnahme (4) endet.

13. Schmiermittel-Dosierpumpe (1) nach einem der Ansprüche 10 bis 12, wobei der Kolbenhub (H2) eines Kolbens sich von der Abgabeöffnung (13) bis in den Bereich der Einlassöffnung (12) erstreckt.

14. Schmiermittel-Dosierpumpe (1) nach einem der Ansprüche 10 bis 13, wobei wenigstens ein Federelement (9a, 9b) vorgesehen ist, das auf einen der Kolben (2a, 2b) einwirkt.

15. Schmiermittel-Dosierpumpe (1) nach einem der Ansprüche 10 bis 14, wobei jedem Kolben (2a, 2b) ein Federelement (9a, 9b) zugeordnet ist, die Federelemente (9a, 9b) einander entgegenwirkend angeordnet sind und das eine Federelement (9a) eine größere Federkraft erzeugt als das andere Federelement (9b).

16. Schmiermittel-Dosierpumpe (1) nach einem der Ansprüche 10 bis 15, wobei das Dosiervolumen (14) in einer Ausgangsstellung mit der Einlassöffnung (12) und in einer in Hubrichtung (H) der Ausgangsstellung beabstandeten Abgabestellung mit der Abgabeöffnung (13) verbunden ist.

17. Schmiermittel-Dosierpumpe (1) nach einem der Ansprüche 10 bis 16, wobei an den Kolben (2a, 2b) Spaltdichtungen (7) ausgebildet sind, durch welche die Einlassöffnung (12) und die Abgabeöffnung (13) druckdicht verschließbar sind.
